# EUROPEAN PATENT SPECIFICATION

(11) **EP 3 299 267 B1**
(45) Date of publication and mention of the grant of the patent: **25.08.2021**
(21) Application number: 16845369.4
(22) Date of filing: 10.10.2016
(51) Int. Cl.: B62K 3/00, B62K 11/00

(54) **HUMAN-MACHINE INTERACTION MOTION APPARATUS**
INTERAKTIVE MENSCH-MASCHINE-BEWEGUNGSVORRICHTUNG
APPAREIL DE MOUVEMENT D'INTERACTION HUMAIN-MACHINE

(30) Priority: 08.08.2016 CN 201620855701 U; 08.08.2016 CN 201620856524 U; 16.08.2016 CN 201610677638
(43) Date of publication of application: 28.03.2018
(73) Proprietor: Hangzhou Chic Intelligent Technology Co., Ltd, Hangzhou, Zhejiang 310000 (CN)
(72) Inventor: YING, Jiawei, Hangzhou Zhejiang 310000 (CN)
(74) Representative: Sun, Yiming
(86) International application number: PCT/CN2016/101609
(87) International publication number: WO 2018/028039

(56) References cited:
- CN-A- 104 443 193
- CN-A- 104 986 264
- CN-A- 105 270 527
- CN-A- 105 775 003
- CN-U- 205 113 552

## Description

### TECHNICAL FIELD

The present disclosure relates to a balance vehicle.

### BACKGROUND

A balance vehicle is also known as a somatosensory vehicle or a thinking vehicle. The operating principle thereof is mainly established on a basic principle called "dynamic stabilization", the change of vehicle posture is detected by a gyroscope and an acceleration sensor inside the vehicle body, and a motor is accurately driven by a servo control system to adjust correspondingly, in order to keep the balance of the system.

The conventional balance vehicle has two vehicle frames opposite to each other and rotatable with respect to each other. A rotation coupling between the two vehicle frames are accomplished by a rotating mechanism mounted on both of the two vehicle frames. The two vehicle frames are joined with each other to form an integral structure. The location where the two vehicle frames are joined with each other of the conventional balance vehicle is only enclosed in a shell without using other assistant member to enhance an overall functional characteristic of the balance vehicle, which limits a development and utilization of the overall structure of the balance vehicle.

CN105270527A discloses a balancing car based on pressure identification. A plurality of pressure sensors used for identifying human foot coverage area and human body weight are distributed on a left supporting module and a right supporting module. The balancing car based on the pressure identification further comprises a main control unit, wherein the main control unit is configured to automatically operate corresponding working modes according to the received human foot coverage area and human body weight, which are measured by the pressure sensors. According to the invention, the weight value and foot area of a driver are identified by using the multi-point pressure sensors; the using modes are automatically adjusted according to the information; and a user can also experience different operations through the plurality of modes; therefore, stable operation and multi-mode use are realized and pleasures are brought in use.

CN 105 775 003A discloses a balance bike with an electric control locking device. The balance bike comprises two hardware brackets and the electric control locking device, wherein a left upper shell and a left lower shell are mounted on the left hardware bracket, and a right upper shell and a right lower shell are mounted on the right hardware bracket; the electric control locking device is fixedly mounted between the two hardware brackets through screws and is an electromagnetic lock or a magnetic powder clutch. According to the balance bike, the electric control locking device with an electric control locking function is mounted between the two hardware brackets to control the balance of a bike body, so that the problem that a user cannot control the posture of the bike due to high speed or the user falls over due to an unstable gravity center because of an external road condition is solved, and the traveling safety and the traveling quality are improved.

CN205113 552 U relates to a balance car field discloses a balance car, all fixes being equipped with one rotatory locating part (1) on left automobile body and the right automobile body, and rotatory locating part (1) is gone up axial fixity and is equipped with round pin (12), still is equipped with groove (14) on ring (11), and round pin (12) on every rotatory locating part (1) are stretched into in groove (14) of another rotatory locating part (1). The utility model provides a rotatory locating part has restricted the angle of balance car wrench movement, because set up the same rotatory locating part on left automobile body and the right automobile body, the symmetry during atress of two round pins, the life of this component has been prolonged, and simultaneously, even one of them round pin of in use damages, can not influence holistic use and performance yet, the fault -tolerance of product has been increased, and only need a mould when making the rotatory locating part on two automobile bodies, compare two moulds making the rotatory limit structure of balance car in original technique and need and reduced by a mould, and saves manufacturing cost.

CN 104 986 264 A relates to an electric balance vehicle. The electric balance vehicle comprises an inner cover, two pedals, two wheels, two hub motors, a power source, two circuit boards and a controller. The inner cover comprises a first inner cover body and a second inner cover body which are symmetrically arranged and can rotate and the faces, facing a user, of the first inner cover body and the second inner cover body are both provided with notches. The two pedals are arranged in the notches of the first inner cover body and the second inner cover body. The two wheels extend out of the two opposite sides of the inner cover respectively, are fixed to the two sides of the inner cover and can rotate around the inner cover. Each wheel further comprises a fixing shaft which extends from the center position of the wheel and is fixed to the inner cover. The two hub motors are arranged in the two wheels respectively. The power source is fixed to the first inner cover body and close to the second inner cover body. The two circuit boards with multiple integrated sensors are fixed to the first inner cover body and the second inner cover body respectively, wherein the circuit board fixed to the first inner cover body is fixed to the position, away from the second inner cover body, of the first inner cover body. The controller is fixed to the second inner cover body and electrically connected with the sensors, the power source and the hub motor and controls the corresponding hub motors to drive the corresponding wheels to rotate according to sensing signals transmitted by the sensors.

CN 104 443 193 A discloses a balance vehicle with the features according to the preamble of claim 1.

### SUMMARY

An object of the present invention is to provide a balance vehicle for solving the above-described technical problems.

The balance vehicle provided by the present invention comprises a first vehicle frame and a second vehicle frame rotatable relative to each other; a rotating mechanism disposed between the first vehicle frame and the second vehicle frame to rotatably connect the first vehicle frame to the second vehicle frame; a rotation stop member fixed on at least one of two opposite sides of the first vehicle frame and the second vehicle frame; and a function extension member rotatably connected to the rotation stop member; wherein the function extension member is connected in a stop connection manner to the rotation stop member(s) of the first vehicle frame and/or the second vehicle frame to limit a rotation angle of the function extension member relative to the first vehicle frame and/or the second vehicle frame, wherein each of the two opposite sides of the first vehicle frame and the second vehicle frame is respectively fixed with one rotation stop member; wherein a first groove is defined on the rotation stop member of the first vehicle frame, the function extension member comprises a first stop bar disposed at a side facing the rotation stop member of the first vehicle frame, the first stop bar of the function extension member is embedded in the first groove and is rotatable in the first groove with respect to the first vehicle frame as the function extension member is mounted on the rotation stop member; a second groove is defined on the rotation stop member of the second vehicle frame, the function extension member comprises a second stop bar disposed at a side facing the rotation stop member of the second vehicle frame, the second stop bar of the function extension member is embedded in the second groove and is rotatable in the second groove with respect to the second vehicle frame as the function extension member is mounted on the rotation stop member.

In one preferred embodiment, the first stop bar and the second stop bar of the function extension member are aligned in a same line.

In one preferred embodiment, the first groove and the second groove, which are respectively defined on the rotation stop members of the first vehicle frame and the second vehicle frame, are bilateral symmetrical with respect to the function extension member, and a maximum rotation angle of the function extension member relative to the first vehicle frame or the second vehicle frame is less than or equal to a maximum rotation angle between the first vehicle frame and the second vehicle frame.

In one preferred embodiment, a battery pack is embedded in the first vehicle frame or the second vehicle frame, a battery pressing plate is covered on a side of the battery pack facing the first vehicle frame or the second vehicle frame, and a battery sealing ring is arranged on an interface between the battery pressing plate and the battery pack.

In one preferred embodiment, the battery pressing plate is provided with a wire hole as a wire passageway for the battery pack, and a wire sealing ring fitted in the wire hole.

In one preferred embodiment, the first vehicle frame and the second vehicle frame are each provided with a foot placement region and a foot pad disposed in the foot placement region, the foot pad is provided with a protrusion fixed on a surface of the foot pad facing the corresponding first vehicle frame or the corresponding second vehicle frame, and the protrusion is partially inserted into the corresponding first or second vehicle frame; a circuit board is disposed on each of the first vehicle frame and the second vehicle frame, and each circuit board is electrically connected to an induction switch corresponding to the protrusion on the foot pad in an one-to-one manner to sense whether or not the protrusion is moved.

In one preferred embodiment, the inductive switch has a U-shaped opening corresponding to the protrusion in an one-to-one manner, the protrusion is extended into the U-shaped opening of the inductive switch in response to a user standing on the foot pad, and the protrusion is retreated out from the U-shaped opening of the inductive switch in response to the user leaving the foot pad.

In one preferred embodiment, the rotating mechanism comprises a rotating shaft, ends of the rotating shaft are extended through the rotation stop members of the first vehicle frame and the second vehicle frame and extended partially out from the first vehicle frame and the second vehicle frame, and the ends of the rotating shaft extended out from the first vehicle frame and the second vehicle frame are engaged with snap springs.

In one preferred embodiment, a stop shaft is disposed between the first vehicle frame and the second vehicle frame, wherein one end of the stop shaft is fixed to the rotation stop member of the first vehicle frame, and another end of the stop shaft is inserted into the rotation stop member of the second vehicle frame, and a stop groove corresponding to the stop shaft is defined on the rotation stop member of the second vehicle frame, and the maximum rotation angle between the first vehicle frame and the second vehicle frame is limited through an engagement between the stop shaft and the stop groove.

Due to the application of the above technical solutions, the present invention has the following advantages:

In the balance vehicle of the present invention, a function extension member is disposed on the two rotation stop members of the first vehicle frame and/or the second vehicle frame, and the function extension member is connected to the first vehicle frame and/or the second vehicle frame in a stop connection manner, by which the balance vehicle is capable of extending the function through the function extension member in an overall structural design of the balance vehicle. In particular, the function extension member can be arranged as, for example, a decoration such as a light or a vehicle status displaying screen. An armrest or a seat can be mounted on the function extension member to further expand other auxiliary functions of the balance vehicle. Thereby, a full development and utilization of the overall structure of the balance vehicle can be achieved to meet the needs of the user.

### BRIEF DESCRIPTION OF THE DRAWINGS

FIG 1 is an exploded view of one preferred embodiment of a balance vehicle.
FIG 2 is a partial cross-sectional view of one preferred embodiment of the balance vehicle.
FIG 3 is an exploded view of a one preferred embodiment of the balance vehicle having a waterproof battery pack.
FIG 4 is an exploded view of another preferred embodiment of the balance vehicle having a simplified controlling switch.

### DETAILED DESCRIPTION

To further clearly illustrate the object of the invention, the technical solution, and the advantages, the invention will be described by way of example with reference to the accompanying drawings. It is to be understood that the specific embodiments described herein are for the purpose of explaining the invention and are not intended to limit the invention.

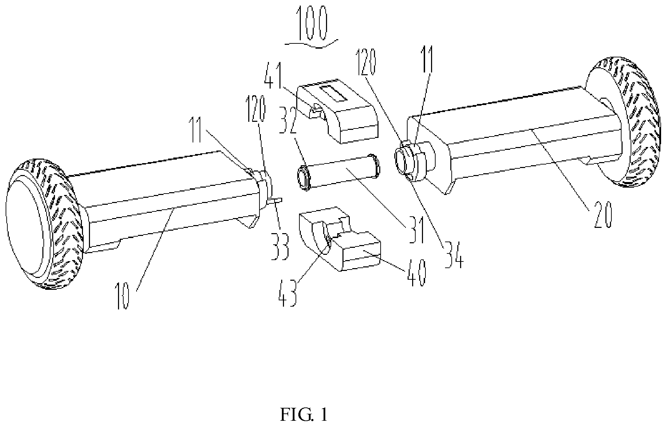

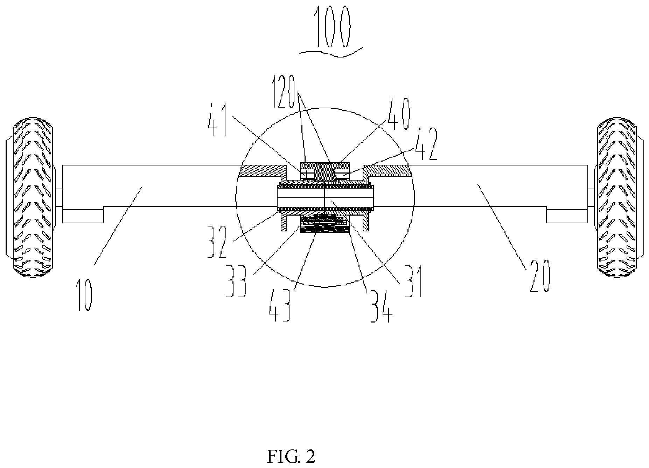

Referring to FIG 1 and FIG 2, a preferred embodiment of the present invention provides a balance vehicle 100 comprising a first vehicle frame 10, and a second vehicle frame 20 opposite to the first vehicle frame 10 and rotatablely connected to the first vehicle frame 10, wherein rotation stop members 120 are respectively provided by being fixed on two opposite sides of the first vehicle frame 10 and the second vehicle frame 20, a rotating mechanism disposed between the first vehicle frame 10 and the second vehicle frame 20 to realize a rotating connection between the first vehicle frame 10 and the second vehicle frame 20, and a function extension member 40 wrapping connected to the rotation stop members 120 on the two opposite sides of the first vehicle frame 10 and the second vehicle frame 20.

The first vehicle frame 10 and the second vehicle frame 20 have substantially the same structure and shape, and the first vehicle frame 10 is rotatable relative to the second vehicle frame 20 under an action of the rotating mechanism. In the present embodiment, the rotating mechanism comprises a rotating shaft 31, two opposite ends of the rotating shaft 31 are respectively extended to the rotation stop members 120 of the first vehicle frame 10 and the second vehicle frame 20, and both of the first vehicle frame 10 and the second vehicle frame 20 are rotatable relative to the rotating shaft 31 to realize the rotating connection between the first vehicle frame 10 and the second vehicle frame 20. The rotating shaft 31 is partially extended out from the first vehicle frame 10 and the second vehicle frame 20, and a snap spring 32 is respectively engaged with each of the ends of the rotating shaft 31 extending out from the first vehicle frame 10 and the second vehicle frame 20. The snap springs 32 are provided in order to achieve a connection along an axial direction between the first vehicle frame 10 and the second vehicle frame 20 in a stop connection manner, and a mutual rotation between the first vehicle frame 10 and the second vehicle frame 20.

In the present embodiment, the rotating mechanism also comprises a stop shaft 33 configured to limit a maximum rotation angle between the first vehicle frame 10 and the second vehicle frame 20, as the rotating mechanism is mounted to the first vehicle frame 10 and the second vehicle frame 20. One end of the stop shaft 33 is fixed to the rotation stop member 120 of the first vehicle frame 10, and another end of the stop shaft 33 is inserted into the rotation stop member 120 of the second vehicle frame 20. A stop groove 34 corresponding to the stop shaft 33 is defined on the rotation stop member 120 of the second vehicle frame 20. The stop groove 34 can limit the maximum rotation angle between the first vehicle frame 10 and the second vehicle frame 20 through an engagement between the stop shaft 33 and the stop groove 34. It is to be understood that the stop groove 34 is an arc shaped structure.

It is to be understood that, according to the requirements of use, the function extension member 40 particularly applied in the balance vehicle 100 can be provided as one part, or as a structure assembled from a plurality of individual parts. Through the assemblage between the function extension member 40 and the two rotation stop members 120 of the first and second vehicle frames 10, 20, the balance vehicle 100 is capable of having a functional extension through the function extension member 40 in an overall structural design of the balance vehicle 100. In particular, the function extension member 40 can be provided as, for example, a decoration such as a light or a vehicle status displaying device. An armrest or a seat can be mounted on the function extension member 40 to further expand other auxiliary functions of the balance vehicle. Thereby, a full development and utilization of the overall structure of the balance vehicle can be achieved to meet the needs of the user.

In the present embodiment, the function extension member 40 is provided with a stop through hole 43 corresponding to the stop shaft 33 so that the stop shaft 33 on the first vehicle frame 10 can smoothly run through the function extension member 40 and extend into the stop groove 34 on the second vehicle frame 20, and a limitation of the maximum rotation angle between the first vehicle frame 10 and the second vehicle frame 20 can be achieved. That is, the function extension member 40 is mounted to the rotation stop members 120 of the first vehicle frame 10 and the second vehicle frame 20, and does not affect the rotation angle between the first vehicle frame 10 and the second vehicle frame 20. Therefore, the stop through hole 43 defined in the function extension member 40 is opposite to the stop groove 34 of the second vehicle frame 20, and has a size equal to or larger than the stop groove 34.

The function extension member 40 is rotatingly connected to the rotation stop member 120 of the first vehicle frame 10 in a stop connection manner. In particular, a first groove 11 is defined on the rotation stop member 120 of the first vehicle frame 10, and correspondingly, the function extension member 40 comprises a first stop bar 41 disposed at a side facing the rotation stop member 120 of the first vehicle frame 10. The first stop bar 41 of the function extension member 40 is embedded in the first groove 11 of the rotation stop member 120 of the first vehicle frame 10, and is rotatable back and forth in the first groove 11 with respect to the first vehicle frame 10, when the function extension member 40 is mounted to the first vehicle frame 10.

Similarly, the function extension member 40 is rotatingly connected to the rotation stop member 120 of the second vehicle frame 20 in a stop connection manner. In particular, a second groove 21 is defined on the rotation stop member 120 of the second vehicle frame 20, and the function extension member 40 comprises a second stop bar 42 disposed at a side facing the rotation stop member 120 of the second vehicle frame 20. The second stop bar 42 of the function extension member 40 is embedded in the second groove 21 of the rotation stop member 120 of the second vehicle frame 20, and is rotatable back and forth in the second groove 21 with respect to the second vehicle frame 20 as the function extension member 40 is mounted to the rotation stop member 120 of the second vehicle frame 20.

In the present embodiment, the first stop bar 41 and the second stop bar 42 of the function extension member 40 are aligned in a same line. Further, the first groove 11 and the second groove 21, which are respectively defined on the rotation stop members 120 of the first vehicle frame 10 and the second vehicle frame 20, are bilateral symmetrical with respect to the function extension member 40. Thereby, as the function extension member 40 is mounted to the rotation stop members 120 of the first vehicle frame 10 and the second vehicle frame 20, the function extension member 40 can rotate respectively about the first vehicle frame 10 and the second vehicle frame 20, and a maximum rotation angle of the function extension member 40 relative to the first vehicle frame 10 and the second vehicle frame 20 can be respectively limited through the first stop bar 41 and the second stop bar 42 of the function extension member 40.

It is to be understood that a maximum rotation angle of the function extension member 40 relative to the first vehicle frame 10 and the second vehicle frame 20 is less than a maximum rotation angle between the first vehicle frame 10 and the second vehicle frame 20 so that the function extension member 40 is capable of rotating further with the first vehicle frame 10 or the second vehicle frame 20 when the function extension member 40 rotates to the maximum rotation angle relative to the first vehicle frame 10 or the second vehicle frame 20.

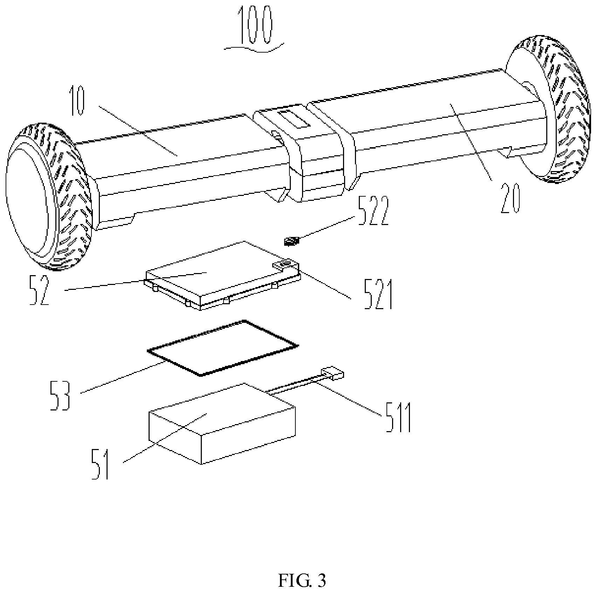

Referring to FIG 3, in one preferred embodiment, the battery pack 51 of the balance vehicle 100 has a waterproof function. It can be understood that, the battery pack 51 can be mounted on the first vehicle frame 10 or the second vehicle frame 20. To achieve the waterproof function of the battery pack 51 in the balance vehicle 100, in the present embodiment, a battery pressing plate 52 is covered on a side of the battery pack 52 facing the first vehicle frame 10 or the second vehicle frame 20, and a battery sealing ring 52 is arranged on an interface between the battery pressing plate 52 and the battery pack 51. The battery sealing ring 52 is pressed between the battery pressing plate 52 and the battery pack 51 to realize the sealing of the vehicle frame having the battery pack 51 mounted thereto, to have the waterproof and sealing function.

It can be understood that, when the battery pack 51 is mounted to the vehicle frame, the electrical wire 511 of the battery pack 51 has one end running through the battery pressing plate 52 thereby connecting to the electrical part on the corresponding vehicle frame, functioning as a power supply from the battery pack 51. To ensure the sealing to the battery pack 51, in the balance vehicle 100 of the present embodiment, the battery pressing plate 52 has a wire hole 521 defined thereon as a passageway for the electrical wire 511 of the battery pack 51. And a wire sealing ring 522 is fitted in the wire hole 521, so that the electrical wire 511 of the battery pack 51 is capable of extending through the wire hole 521 on the battery pressing plate 52 and being sealed by the wire sealing ring 522 to ensure the sealing effect of the battery pack 51.

It can be understood that, through the above discussed structure, the battery pack 51 can be waterproofed in the balance vehicle 100, which effectively solves the waterproof problem of the battery, to avoid safety incidents such as explosion or outbreak of fire caused by water infiltration or soak in use of the balance vehicle 100.

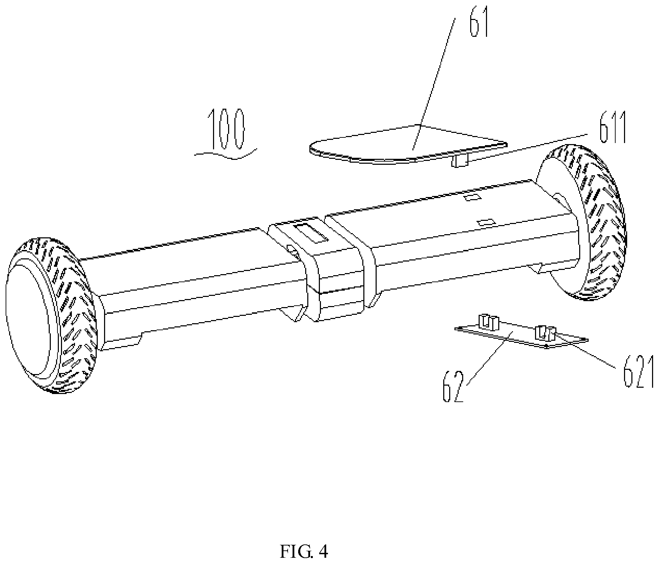

Referring to FIG 4, as another preferred embodiment, the balance vehicle 100 has an on/off controlling switch simplified through a suitable structure arrangement.

It can be noted that, in the embodiment, the first vehicle frame 10 and the second vehicle frame 20 of the balance vehicle 100 are each provided with a foot placement region for the user to stand on. A foot pad 61 is disposed in each foot placement region. The foot pad 61 is provided with a protrusion 611 fixed on a surface of the foot pad 61 facing the first vehicle frame 10 or the second vehicle frame 20, and the protrusion 611 is partially inserted into the corresponding first vehicle frame 10 or second vehicle frame 20. The protrusion 611 is used as an on/off switch for an overall operation of the balance vehicle 100. Correspondingly, each of the first vehicle frame 10 and the second vehicle frame 20 is provided a circuit board 62 thereon, and each circuit board 62 is electrically connected to an induction switch 621 corresponding to the protrusion 611 on the foot pad 61 in an one-to-one manner to sense whether or not the protrusion 611 is moved. In the present embodiment, the induction switch 621 is a photoelectric switch.

In the present embodiment, the inductive switch 621 has a U-shaped opening corresponding to the protrusion 611 in an one-to-one manner, the protrusion 611 is extended into the U-shaped opening of the inductive switch 621 when the user stands on the foot pad 61, and the protrusion 611 is retreated out from the U-shaped opening of the inductive switch 621 when the user stands off from the foot pad 61. Through the signal transmission from the inductive switch 621, the overall opening and closing control for the balance vehicle 100 can be realized.

It is to be noted that the present embodiment simplifies the structure of the controlling switch for opening and closing control of the balance vehicle 100, which reduces the production cost of the controlling switch and, on the other hand, reduces the cost of assembling the controlling switch to the balance vehicle 100, so that the production cost of the balance vehicle 100 is reduced, thereby further meeting a production development of a producer.

## Claims

1. A balance vehicle (100), comprising:
a first vehicle frame (10) and a second vehicle frame (20) rotatable relative to each other;
a rotating mechanism disposed between the first vehicle frame and the second vehicle frame to rotatably connect the first vehicle frame to the second vehicle frame;
a rotation stop member (120) fixed on at least one of two opposite sides of the first vehicle frame and the second vehicle frame; and
a function extension member (40) rotatably connected to the rotation stop member;
wherein the function extension member is connected in a stop connection manner to the rotation stop member of the first vehicle frame and/or the second vehicle frame to limit a rotation angle of the function extension member relative to the first vehicle frame and/or the second vehicle frame,
**characterized in that**
each of the two opposite sides of the first vehicle frame and the second vehicle frame is respectively fixed with one rotation stop member; wherein a first groove (11) is defined on the rotation stop member of the first vehicle frame, the function extension member comprises a first stop bar (41) disposed at a side facing the rotation stop member of the first vehicle frame, the first stop bar of the function extension member is embedded in the first groove and is rotatable in the first groove with respect to the first vehicle frame as the function extension member is mounted on the rotation stop member; a second groove (21) is defined on the rotation stop member of the second vehicle frame, the function extension member comprises a second stop bar (42) disposed at a side facing the rotation stop member of the second vehicle frame, the second stop bar of the function extension member is embedded in the second groove and is rotatable in the second groove with respect to the second vehicle frame as the function extension member is mounted on the rotation stop member.

2. The balancing vehicle according to claim 1, **characterized in that** the first stop bar and the second stop bar of the function extension member are aligned in a same line.

3. The balancing vehicle according to claim 2, **characterized in that** the first groove and the second groove, which are respectively defined on the rotation stop members of the first vehicle frame and the second vehicle frame, are bilateral symmetrical with respect to the function extension member, and a maximum rotation angle of the function extension member relative to the first vehicle frame or the second vehicle frame is less than or equal to a maximum rotation angle between the first vehicle frame and the second vehicle frame.

4. The balancing vehicle according to claim 1, **characterized by** further comprising a battery pack (51) embedded in the first vehicle frame or the second vehicle frame, a battery pressing plate (52) covered on a side of the battery pack facing the first vehicle frame or the second vehicle frame, and a battery sealing ring (53) arranged on an interface between the battery pressing plate and the battery pack.

5. The balancing vehicle according to claim 4, **characterized in that** the battery pressing plate is provided with a wire hole (521) as a wire (511) passageway for the battery pack, and a wire sealing ring (522) fitted in the wire hole.

6. The balancing vehicle according to claim 1, **characterized in that** the first vehicle frame and the second vehicle frame are each provided with a foot placement region and a foot pad (61) disposed in the foot placement region, the foot pad is provided with a protrusion (611) fixed on a surface of the foot pad facing the corresponding first vehicle frame or the second vehicle frame, and the protrusion is partially inserted into the corresponding first or second vehicle frame, a circuit board (62) is disposed on each of the first vehicle frame and the second vehicle frame, and the circuit board is electrically connected to an induction switch (621) corresponding to the protrusion on the foot pad to sense whether or not the protrusion is moved.

7. The balancing vehicle according to claim 6, **characterized in that** the inductive switch has a U-shaped opening corresponding to the protrusion, the projection is extended into the U-shaped opening of the inductive switch in response to a user standing on the foot pad, and the projection is retreated out from the U-shaped opening of the inductive switch in response to the user leaving the foot pad.

8. The balancing vehicle according to claim 1, **characterized in that** the rotating mechanism comprises a rotating shaft (31), ends of the rotating shaft are extended through the rotation stop members of the first vehicle frame and the second vehicle frame and extended out from the first vehicle frame and the second vehicle frame, and the ends of the rotating shaft extended out from the first vehicle frame and the second vehicle frame are engaged with snap springs (32).

9. The balancing vehicle according to claim 8, **characterized by** further comprising a stop shaft (33) disposed between the first vehicle frame and the second vehicle frame, wherein one end of the stop shaft is fixed to the rotation stop member of the first vehicle frame, and another end of the stop shaft is inserted into the rotation stop member of the second vehicle frame, and a stop groove (34) corresponding to the stop shaft is defined on the rotation stop member of the second vehicle frame, and the maximum rotation angle between the first vehicle frame and the second vehicle frame is limited through an engagement between the stop shaft and the stop groove.

## Patentansprüche

1. Balancefahrzeug (100), umfassend:
einen ersten Fahrzeugrahmen (10) und einen zweiten Fahrzeugrahmen (20), die in Bezug zueinander drehbar sind;
einen Drehmechanismus, der zwischen dem ersten Fahrzeugrahmen und dem zweiten Fahrzeugrahmen angeordnet ist, zum drehbaren Verbinden des ersten Fahrzeugrahmens mit dem zweiten Fahrzeugrahmen;
ein Drehanschlagsglied (120), das auf zumindest einer von zwei gegenüberliegenden Seiten des ersten Fahrzeugrahmens und des zweiten Fahrzeugrahmens befestigt ist;
und
ein Funktionserweiterungsglied (40), das drehbar mit dem Drehanschlagsglied verbunden ist;
wobei das Funktionserweiterungsglied in der Art und Weise einer Anschlagverbindung mit dem Drehanschlagglied des ersten Fahrzeugrahmens und/oder des zweiten Fahrzeugrahmens verbunden ist, um einen Drehwinkel des Funktionserweiterungsglieds bezüglich des ersten Fahrzeugrahmens und/oder des zweiten Fahrzeugrahmens zu begrenzen,
**dadurch gekennzeichnet, dass**
jede der zwei gegenüberliegenden Seiten des ersten Fahrzeugrahmens und des zweiten Fahrzeugrahmens jeweils mit einem Drehanschlagsglied befestigt ist; wobei eine erste Nut (11) am Drehanschlagsglied des ersten Fahrzeugrahmens definiert ist, das Funktionserweiterungsglied eine erste Anschlagstange (41) umfasst, die auf einer Seite angeordnet ist, welche dem Drehanschlagsglied des ersten Fahrzeugrahmens zugewandt ist, wobei die erste Anschlagstange des Funktionserweiterungsglieds in die erste Nut eingebettet ist und in der ersten Nut bezüglich des ersten Fahrzeugrahmens drehbar ist, wenn das Funktionserweiterungsglied am Drehanschlagsglied angebracht ist; wobei eine zweite Nut (21) am Drehanschlagsglied des zweiten Fahrzeugrahmens definiert ist, das Funktionserweiterungsglied eine zweite Anschlagstange (42) umfasst, die auf einer Seite angeordnet ist, welche dem Drehanschlagsglied des zweiten Fahrzeugrahmens zugewandt ist, die zweite Anschlagstange des Funktionserweiterungsglieds in der zweiten Nut eingebettet ist und bezüglich des zweiten Fahrzeugrahmens drehbar ist, wenn das Funktionserweiterungsglied am Drehanschlagsglied angebracht ist.

2. Balancefahrzeug nach Anspruch 1, **dadurch gekennzeichnet, dass** die erste Anschlagstange und die zweite Anschlagstange des Funktionserweiterungsglieds in einer gleichen Linie ausgerichtet sind.

3. Balancefahrzeug nach Anspruch 2, **dadurch gekennzeichnet, dass** die erste Nut und die zweite Nut, die jeweils an den Drehanschlagsgliedern des ersten Fahrzeugrahmens und des zweiten Fahrzeugrahmens definiert sind, bezüglich des Funktionserweiterungsglieds bilateral symmetrisch sind, und dass ein maximaler Drehwinkel des Funktionserweiterungsglieds bezüglich des ersten Fahrzeugrahmens oder des zweiten Fahrzeugrahmens geringer als oder gleich einem maximalen Drehwinkel zwischen dem ersten Fahrzeugrahmen und dem zweiten Fahrzeugrahmen ist.

4. Balancefahrzeug nach Anspruch 1, **dadurch gekennzeichnet, dass** es ferner ein Batteriepack (51), das im ersten Fahrzeugrahmen oder zweiten Fahrzeugrahmen eingebettet ist, eine Batteriedruckplatte (52), die auf einer Seite des Batteriepacks ausgelegt ist, welche dem ersten Fahrzeugrahmen oder dem zweiten Fahrzeugrahmen zugewandt ist, und einen Batteriedichtungsring (53) umfasst, der an einer Grenzfläche zwischen der Batteriedruckplatte und dem Batteriepack angeordnet ist.

5. Balancefahrzeug nach Anspruch 4, **dadurch gekennzeichnet, dass** die Batteriedruckplatte mit einem Drahtloch (521) als Durchgang für einen Draht (511) für das Batteriepack und einem Drahtdichtungsring (522), der in das Drahtloch eingepasst ist, versehen ist.

6. Balancefahrzeug nach Anspruch 1, **dadurch gekennzeichnet, dass** der erste Fahrzeugrahmen und der zweite Fahrzeugrahmen jeder mit einer Fußplatzierungsregion und einer Fußplattform (61), die in der Fußplatzierungsregion angeordnet ist, versehen ist, wobei die Fußplattform mit einem Vorsprung (611) versehen ist, der auf einer Oberfläche der Fußplattform befestigt ist, welche dem entsprechenden ersten Fahrzeugrahmen oder dem zweiten Fahrzeugrahmen zugewandt ist, und der Vorsprung teilweise in den entsprechenden ersten oder zweiten Fahrzeugrahmen eingefügt ist, wobei eine Leiterplatte (62) an jedem des ersten Fahrzeugrahmens und des zweiten Fahrzeugrahmens angeordnet ist und die Leiterplatte mit einem Induktionsschalter (621), der dem Vorsprung an der Fußplattform entspricht, zum Abfühlen, ob der Vorsprung bewegt wird oder nicht, elektrisch verbunden ist.

7. Balancefahrzeug nach Anspruch 6, **dadurch gekennzeichnet, dass** der induktive Schalter eine U-förmige Öffnung, die dem Vorsprung entspricht, aufweist, der Vorsprung in Reaktion darauf, dass ein Benutzer auf der Fußplattform steht, in die U-förmige Öffnung des induktiven Schalters ausgefahren wird und der Vorsprung in Reaktion darauf, dass der Benutzer die Fußplattform verlässt, aus der U-förmigen Öffnung des induktiven Schalters zurückgezogen wird.

8. Balancefahrzeug nach Anspruch 1, **dadurch gekennzeichnet, dass** der Drehmechanismus eine Drehwelle (31) umfasst, wobei Enden der Drehwelle durch die Drehanschlagsglieder des ersten Fahrzeugrahmens und des zweiten Fahrzeugrahmens verlaufen und aus dem ersten Fahrzeugrahmen und dem zweiten Fahrzeugrahmen heraus verlaufen, und wobei die Enden der Drehwellen, die aus dem ersten Fahrzeugrahmen und dem zweiten Fahrzeugrahmen heraus verlaufen, mit Schnappfedern (32) in Eingriff gebracht sind.

9. Balancefahrzeug nach Anspruch 8, **dadurch gekennzeichnet, dass** es ferner eine Anschlagwelle (33) umfasst, die zwischen dem ersten Fahrzeugrahmen und dem zweiten Fahrzeugrahmen angeordnet ist, wobei ein Ende der Anschlagwelle am Drehanschlagsglied des ersten Fahrzeugrahmens befestigt ist und ein anderes Ende der Anschlagwelle in das Drehanschlagsglied des zweiten Fahrzeugrahmens eingefügt ist, und wobei eine Anschlagnut (34), die der Anschlagwelle entspricht, am Drehanschlagsglied des zweiten Fahrzeugrahmens definiert ist und der maximale Drehwinkel zwischen dem ersten Fahrzeugrahmen und dem zweiten Fahrzeugrahmen durch einen Eingriff zwischen der Anschlagwelle und der Anschlagnut begrenzt ist.

## Revendications

1. Véhicule à équilibre (100), comprenant :
un premier cadre de véhicule (10) et un second cadre de véhicule (20) pouvant tourner l'un par rapport à l'autre ;
un mécanisme rotatif disposé entre le premier cadre de véhicule et le second cadre de véhicule pour connecter de manière rotative le premier cadre de véhicule au second cadre de véhicule ;
un élément d'arrêt de rotation (120) fixé sur au moins une de deux faces opposées du premier cadre de véhicule et du second cadre de véhicule ; et
un élément d'extension de fonction (40) connecté de manière à pouvoir tourner à l'élément d'arrêt de rotation ;
l'élément d'extension de fonction étant connecté de manière à arrêter la connexion à l'élément d'arrêt de rotation du premier cadre de véhicule et/ou du second cadre de véhicule pour limiter un angle de rotation de l'élément d'extension de fonction par rapport au premier cadre de véhicule et/ou du second cadre de véhicule,
**caractérisé en ce que**
chacune des deux faces opposées du premier cadre de véhicule et du second cadre de véhicule est respectivement fixée à un élément d'arrêt de rotation ; une première gorge (11) étant définie sur l'élément d'arrêt de rotation du premier cadre de véhicule, l'élément d'extension de fonction comprenant une première barre d'arrêt (41) disposée sur une face tournée vers l'élément d'arrêt de rotation du premier cadre de véhicule, la première barre d'arrêt de l'élément d'extension de fonction étant encastrée dans la première gorge et pouvant tourner dans la première gorge par rapport au premier cadre de véhicule lorsque l'élément d'extension de fonction est monté sur l'élément d'arrêt de rotation ; une seconde gorge (21) étant définie sur l'élément d'arrêt de rotation du second cadre de véhicule, l'élément d'extension de fonction comprenant une seconde barre d'arrêt (42) disposée sur une face tournée vers l'élément d'arrêt de rotation du second cadre de véhicule, la seconde barre d'arrêt de l'élément d'extension de fonction étant encastrée dans la seconde gorge et pouvant tourner dans la seconde gorge par rapport au second cadre de véhicule lorsque l'élément d'extension de fonction est monté sur l'élément d'arrêt de rotation.

2. Véhicule à équilibre selon la revendication 1, **caractérisé en ce que** la première barre d'arrêt et la seconde barre d'arrêt de l'élément d'extension de fonction sont alignées sur une même ligne.

3. Véhicule à équilibre selon la revendication 2, **caractérisé en ce que** la première gorge et la seconde gorge, qui sont respectivement définies sur les éléments d'arrêt de rotation du premier cadre de véhicule et du second cadre du véhicule, sont bilatéralement symétriques à l'élément d'extension de fonction, et qu'un angle de rotation maximum de l'élément d'extension de fonction par rapport au premier cadre de véhicule ou au second cadre de véhicule est inférieure ou égal à un angle de rotation maximum entre le premier cadre de véhicule et le second cadre de véhicule.

4. Véhicule à équilibre selon la revendication 1, **caractérisé en ce qu'**il comprend en outre un pack de batteries (51) encastré dans le premier cadre de véhicule ou le second cadre de véhicule, une plaque de pression de batteries (52) couverte sur un côté du pack de batteries tourné vers le premier cadre de véhicule ou le second cadre de véhicule, et un anneau de scellement de batteries (53) disposé sur l'interface entre la plaque de pression de batteries et le pack de batteries.

5. Véhicule à équilibre selon la revendication 4, **caractérisé en ce que** la plaque de pression de batterie est pourvue d'un orifice à fil (521) faisant office de passage de fil (511) pour le pack de batteries, et d'un anneau de scellement de fil (522) ajusté dans le trou à fil.

6. Véhicule à équilibre selon la revendication 1, **caractérisé en ce que** le premier cadre de véhicule et le second cadre de véhicule sont chacun pourvus d'une zone de placement de pied et d'un marchepied (61) disposé dans la zone de placement de pied, le marchepied étant pourvu d'une saillie (611) fixée sur une surface du marchepied tournée vers le premier cadre de véhicule ou le second cadre de véhicule correspondant, et que la saillie est insérée partiellement dans le premier cadre de véhicule ou le second cadre de véhicule correspondant, qu'un circuit imprimé (62) est disposé sur chacun des premier cadre de véhicule et second cadre de véhicule, et que le circuit imprimé est connecté électriquement à un interrupteur à induction (621) correspondant à la saillie du marchepied pour détecter si oui ou non la saillie est déplacée.

7. Véhicule à équilibre selon la revendication 6, **caractérisé en ce que** l'interrupteur inductif comporte une ouverture en forme de U correspondant à la saillie, que la saillie s'étend dans l'ouverture en forme de U de l'interrupteur inductif en réaction au fait que l'utilisateur est debout sur le marchepied, et que la saillie se met en retrait depuis l'ouverture en forme de U de l'interrupteur inductif en réaction au fait que l'utilisateur quitte le marchepied.

8. Véhicule à équilibre selon la revendication 1, **caractérisé en ce que** le mécanisme rotatif comprend un arbre rotatif (31), que les extrémités de l'arbre rotatif s'étendent à travers les éléments d'arrêt de rotation du premier cadre de véhicule et du second cadre de véhicule et s'étendent depuis le premier cadre de véhicule et le second cadre de véhicule, et que les extrémités de l'arbre rotatif s'étendant depuis le premier cadre de véhicule et le second cadre de véhicule sont engagées dans des ressorts à déclic (32).

9. Véhicule à équilibre selon la revendication 8, **caractérisé en ce qu'**il comprend en outre un arbre d'arrêt (33) disposé entre le premier cadre de véhicule et le second cadre de véhicule, une extrémité de l'arbre d'arrêt étant fixée à l'élément d'arrêt de rotation du premier cadre de véhicule, et une autre extrémité de l'arbre d'arrêt étant insérée dans l'élément d'arrêt de rotation du second cadre de véhicule, et une gorge d'arrêt (34) correspondant à l'arbre d'arrêt étant définie sur l'élément d'arrêt de rotation du second cadre de véhicule, et l'angle de rotation maximum entre le premier cadre de véhicule et le second cadre de véhicule étant limité par un engagement entre l'arbre d'arrêt et la gorge d'arrêt.
